# EUROPEAN PATENT APPLICATION

(11) **EP 1 670 116 A1**
(43) Date of publication of application: **14.06.2006**
(21) Application number: 04747868.0
(22) Date of filing: 23.07.2004
(51) Int. Cl.: H02K 1/12, H02K 1/02

(54) **YOKE, ELECTROMAGNETIC ACTUATOR, AND STIRLING ENGINE**

(30) Priority: 30.09.2003 JP 2003341455
(71) Applicant: SHARP KABUSHIKI KAISHA, Osaka 545-8522 (JP)
(72) Inventor: TANAKA, Shohzoh, Nara 6308114 (JP)
(74) Representative: Brown, Kenneth Richard
(86) International application number: PCT/JP2004/010481
(87) International publication number: WO 2005/034304

(57) **Abstract**

A yoke used for an electromagnetic actuator is formed by molding a soft magnetic iron powder, and, in the yoke, a discontinuous portion is formed which prevents the occurrence of eddy current loss. This discontinuous portion prevents eddy current and permits the actuator to operate at high efficiency.

## Description

### Technical Field of the Invention

The present invention relates to a yoke forming a magnetic circuit, an electromagnetic actuator including the aforementioned yoke, and a Stirling engine including the aforementioned electromagnetic actuator.

### Background Arts

Conventionally, as a yoke of an electromagnetic (linear) actuator, a laminated yoke having thin plates laminated is used for the purpose of preventing occurrence of eddy current. This laminated yoke is manufactured by laminating by caulking, bonding, or the like the predetermined number of yoke blank plates that are molded into a predetermined shape by punching or the like. The laminated yoke is formed with the top and bottom surfaces thereof parallel to each other and with the side surfaces thereof orthogonal to the top and bottom surfaces.

In a motor having a coil wound around a laminated yoke to thereby generate an electromagnetic power, the coil is turned within a cross section orthogonal to the movement direction of a reciprocator. Therefore, in a typical rotary motor, yoke blank plates composing a reciprocator are laminated along the rotation axis in the direction orthogonal thereto. In a linear motor having a reciprocator make linear motion, yoke blank plates are laminated in the direction orthogonal to the motion direction of the reciprocator.

In a cylindrical linear actuator that has a stator or a reciprocator formed in the shape of a cylinder and that causes the reciprocator to make linear motion in the axial direction of this cylinder, yoke blank plates need to be laminated along the circumference of the stator or the reciprocator.

Thus, patent publication JP-A-2000-337725 discloses an outer yoke provided by arranging, at the same central angle of 45 degrees, outer laminated cores prepared by laminating a plurality of a pair of U-shaped yoke blank plates and an inner yoke provided by arranging, at the same central angle of 45 degrees, inner laminated cores prepared by laminating yoke blank plates with a shorter side thereof notched. The outer cores and inner cores face each other.

However, although the yokes disclosed in JP-A-2000-337725 can prevent the occurrence of eddy current at the yoke, the magnetic property of the entire outer yoke and inner yoke becomes nonuniform depending on location, thus resulting in deterioration in the efficiency as a yoke.

In patent publication JP-A-2002-369462, rectangular iron-core blank plates (thin plates) are laminated, and the inner circumferential side surface thereof is warped concavely and the outer circumferential side surface thereof is warped convexly to thereby form a fan-like laminated iron core with a central angle of 45 degrees, and then this laminated iron core is fitted to the outer circumferential surface of a cylindrical base member, thereby providing an inner yoke, and the one in which the iron blank plates laminated circumferentially on the cylindrical base member is disclosed. An outer yoke is disclosed in which iron-blank plates are arranged at the outer side of a reciprocator coaxially with the inner yoke.

The inner yoke as described in JP-A-2002-369462 can prevent the occurrence of eddy current at the yoke, and both the inner yoke and an outer yoke have nearly uniform magnetic property without any substantial location-dependent variation in the magnetic property.

However, as is the case with the yoke described in JP-A-2002-369462, it is very difficult to laminate thin plates of an equal thickness radially with respect to the central axis. Moreover, there is a remarkable variance in the dimensional accuracy among manufactured yokes, which requires modification for finishing after their manufacture.

The difficulty in laminating the thin plates radially with respect to the central axis and also the need for modification after their manufacture results in an increase in the manufacturing time and also an increase in the manufacturing costs. Moreover, due to the complicated structure, problems of low durability and low shock resistance arise.

On the contrary, WO00/62406 discloses a compression-molded body manufactured by compression molding a mixture of metallic magnetic particles and electrical insulating resin, which compression-molded body is used for an inner yoke or an outer yoke of an electromagnetic linear actuator. Such a composition permits a more simplified structure and also permits manufacturing those with high durability and high shock resistance.

WO00/62406 discloses that a mixture of metallic magnetic particles and electrical insulating resin is compression molded, so that the adjacent metallic magnetic particles are electrically insulated from each other by the electrical insulating resin, thereby preventing the occurrence of eddy current loss (a sixth embodiment in patent publication 3) .
[Patent publication 1] JP-A-2000-337725
[Patent publication 2] JP-A-2002-369462
[Patent publication 3] WO00/62406

### Disclosure of the Invention

On the other hand, it is desired that an electromagnetic (linear) actuator be driven with high operation efficiency. Especially when the electromagnetic linear actuator is used as a drive source of a Stirling engine and this is operated as a freezing machine, the operation efficiency in particular becomes critical.

However, as described in WO00/62406, the compression-molding of a mixture of metallic magnetic particles and electrical insulating resin is not sufficient to achieve operation with high operation efficiency. That is, this cannot suppress the occurrence of eddy current loss sufficiently, making it difficult to achieve high operation efficiency.

Thus, it is an object of the present invention to provide an electromagnetic (linear) actuator that drives with high efficiency. Ii is also an object of the invention to provide a Stirling engine with high efficiency, i.e., favorable performance efficiency achieved by using this actuator.

To achieve the object described above, the present invention provides a yoke that is formed by sintering a soft magnetic iron powder and that is used for an electromagnetic actuator, including a discontinuous portion for preventing occurrence of eddy current loss.

The yoke in this invention denotes, not limited to inner yokes nor outer yokes, but all yokes commonly used for general linear actuators and is formed by means of sintering molding, compression molding, or the like performed on a soft magnetic iron powder. The aforementioned discontinuous portion includes not only notches and grooves but also gaps between divisions. The aforementioned yoke includes those formed by being circumferentially divided and combined together into a cylindrical shape. This yoke permits favorably preventing the occurrence of eddy current loss and providing the actuator with high operation efficiency.

In the structure described above, an example of the discontinuous portion includes the one having one or a plurality of notches extended axially from one end surface toward another end surface thereof.

This structure permits favorably preventing the occurrence of eddy current loss and providing the actuator with high operation efficiency.

Further, an example of the one having one or a plurality of notches extended axially from one end surface to another end surface thereof additionally includes the one having one or a plurality of notches extended axially from said another end surface to said one end surface.

This structure permits more favorably preventing the occurrence of eddy current loss and providing the actuator with high operation efficiency.

In the structure described above, an example of the discontinuous portion includes the one having one or a plurality of grooves (i.e., grooves having a depth in the direction orthogonal to the axial center) extended axially on the outer side surface and (or) the inner side surface of the yoke.

An example of the yoke according to the invention includes the one which is divided circumferentially into a plurality of blocks, in which the adjacent blocks are connected together with an insulating material sandwiched therebetween and the connection portion where the insulating material is sandwiched serves as the discontinuous portion.

With this structure, since circumferentially dividing a yoke of a large diameter permits fabricating each of the divided portions as a small part, substantial location-dependent variation in the magnetic property hardly occurs, thus permitting providing a yoke with nearly uniform magnetic property.

An example of the yoke structured as described above includes the one which is divided axially into plurality of divisions.

With this structure, when the yoke is long in the axial direction, dividing it axially permits fabricating each of the divided portions as a small part, so that substantial location-dependent variation in the magnetic property hardly occurs, thus permitting providing a yoke with nearly uniform magnetic property.

To achieve the object described above, the present invention provides an electromagnetic actuator including: an outer yoke; an inner yoke that is formed by molding a soft magnetic iron powder and that is so arranged as to face the inside of the outer yoke; a coil portion that is provided at the outer yoke; a permanent magnet that reciprocates in accordance with a magnetic flux generated by the coil portion arranged between the outer yoke and the inner yoke; and a reciprocator that supports the permanent magnet, in which the yoke described above is adopted as the outer yoke and (or) the inner yoke.

This structure permits favorably preventing the occurrence of eddy current loss and providing the actuator with high operation efficiency.

The electromagnetic linear actuator described above can preferably be used for a Stirling engine, thereby permitting providing a Stirling engine with a high coefficient of performance.

The invention can provide a yoke that favorably prevents occurrence of eddy current loss, or an electromagnetic (linear) actuator capable of being driven at high efficiency, or a Stirling engine with a favorable coefficient of performance.

### Brief Description of the Drawings

[FIG. 1A] FIG. 1A is a vertical sectional view of a linear actuator employing an inner yoke according to the present invention.
[FIG. 1B] FIG. 1B is a horizontal sectional view of the linear actuator shown in FIG. 1A.
[FIG. 2A] FIG. 2A is a perspective view of an inner yoke according to a first embodiment of the invention.
[FIG. 2B] FIG. 2B is a plan view of the inner yoke shown in FIG. 2A.
[FIG. 3] FIG. 3 is a perspective view of an inner yoke according to a second embodiment of the invention.
[FIG. 4] FIG. 4 is a graph showing the relationship between the number of discontinuous portions and the efficiency when the inner yoke according to the present invention is adopted for the linear actuator.
[FIG. 5A] FIG. 5A is a perspective view of another example of the inner yoke according to the invention.
[FIG. 5B] FIG. 5B is a plan view of the inner yoke shown in FIG. 5A.
[FIG. 6A] FIG. 6A is a perspective view of still another example of the inner yoke according to the invention.
[FIG. 6B] FIG. 6B is a plan view of the inner yoke shown in FIG. 6A.
[FIG.7] FIG. 7 is a perspective view of still another example of the inner yoke according to the invention.
[FIG. 8] FIG. 8 is a side sectional view of the inner yoke shown in FIG. 7 fitted to a cylinder.
[FIG. 9] FIG. 9 is a perspective view of the inner yokes shown in FIG. 2 that are axially coupled together.
[FIG. 10] FIG. 10 is a sectional view of a Stirling engine of the invention.

### List of Reference Numerals

- A: Linear actuator
- 1: Inner yoke
- 2: Cylinder
- 22: Piston
- 3: Reciprocator
- 3 a: Permanent magnet
- 4: Outer yoke
- 5: Coil
- 11c to18c: Discontinuous portions
- 11d to 16d: Discontinuous portions
- 11e to 16e: Discontinuous portions
- 11f to 18f: Discontinuous portions

### Best Mode of Carrying out the Invention

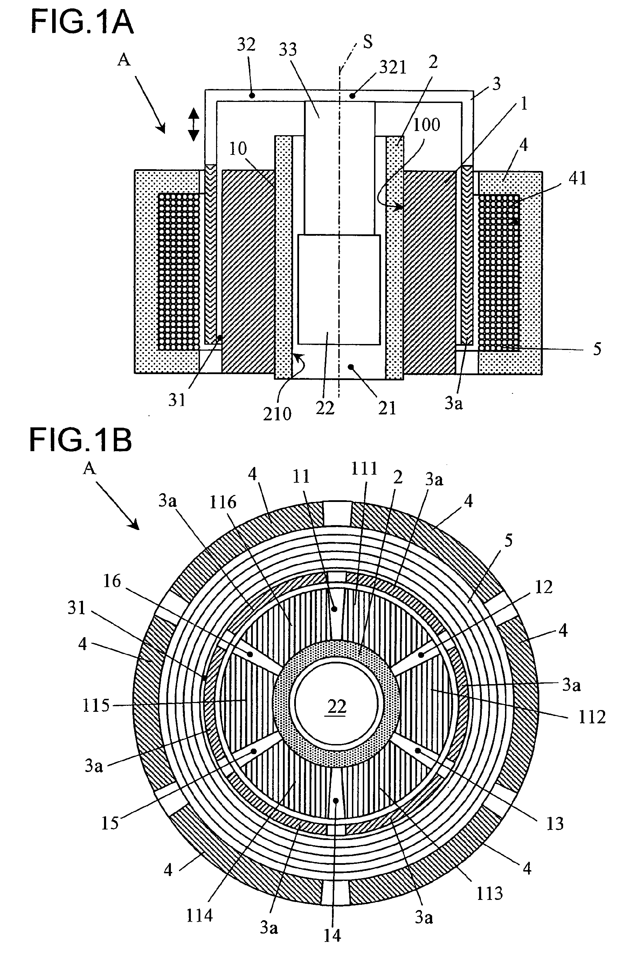

Hereinafter, a first embodiment of the present invention will be described with reference to the drawings. FIG. 1A is a sectional view of one example of a linear actuator of the invention. FIG. 1B is a plan view of the linear actuator shown in FIG. 1A.

The linear actuator A shown in FIG. 1A and FIG. 1B has: an inner yoke 1 having a cylindrical shape, a cylinder 2 that is inserted in an inner circumferential surface 100 of a cylinder part 10 of the cylindrically shaped inner yoke 1, a reciprocator 3 that is arranged on the outer side of the inner yoke 1 but not in contact therewith, outer yokes 4 that are arranged on the further outer side of the reciprocator 3 but not in contact with the inner yoke 1 and the reciprocator 3, and a coil 5 that is arranged on a groove part 41 on the inner circumferential surface of the outer yokes 4. The inner yoke 1, the cylinder 2, the reciprocator 3, the outer yokes 4, and the coil 5 are arranged with respect to a central axis S of the cylinder 2 as an axial center.

The inner yoke 1 is fixed to the cylinder 2. A method of this fixation can be exemplified by the one achieved through bonding of the contact area between the inner yoke 1 and the cylinder 2 with bonding means such as a bonding agent, an adhesive tape, or the like. In this embodiment, a method of achieving fixation with a bonding agent is adopted.

The inner yoke 1 has, as discontinuous portions, the six discontinuous portions 11 to 16 spaced apart circumferentially therealong at intervals of the same central angles (α=60°). The discontinuous portions 11 to 16 of the inner yoke 1 are so formed as to be in a state that blocks current flow (insulating state) or in a state where the electrical resistance is very high (state that conducts almost no electricity). In an inside 21 of the cylinder 2, a piston 22 is included which is coupled with a reciprocator 3 and which is caused by the linear actuator A to make reciprocating motion. The piston 22 is so arranged as to slide on an inner surface 210 of the cylinder 2 via a gas film or an oil film.

The reciprocator 3 has a bottomed cylindrical shape (having a bottom wall thereof provided with an opening), with an open end side 31 thereof fitted with permanent magnets 3a. On the inner side of a central portion 321 of a closed end side 32 thereof, a coupling member 33 for coupling the reciprocator 3 and the piston 22 together is included. The coupling member 33 has a columnar shape with an axis S as the central axis.

As can be seen from FIG. 1B, portions 111 to 116 partitioned by the adjacent discontinuous portions 11 to 16 of the inner yoke 1, the permanent magnets 3a independently provided, and the outer yokes 4 are so arranged at to face one another in the radial direction of the cylinder 2.

The permanent magnets 3a are six permanent magnets independently provided, and they are so arranged as to be located at the outer side of the inner yoke 1 while not in contact therewith but facing, in one-to-one correspondence, the portions 111 to 116 partitioned by the adjacent discontinuous portions 11 to 16 of the inner yoke 1 (with a gap provided between the adjacent permanent magnets). That is, the independent permanent magnets 3a are arranged, each having the same central angle.

The outer yokes 4 include, as is the case with the permanent magnets 3a, six independent outer yokes, and they are arranged on the outer side of the permanent magnets 3a so as not to be in contact therewith and also so as to face, in one-to-one correspondence, the permanent magnets 3a arranged with the same central angles.

The coil 5 is connected to a power source, not shown, from which a current flows which changes its direction with a fixed amplitude and in a fixed cycle. Current flow to the coil 5 generates a magnetic field around the coil.

The linear actuator A is actuated by utilizing a force acting when a magnetic field is generated through current flow to the coil 5 and then the magnetic flux density of the magnetic field generated between the inner yoke 1 and the outer yokes 4 and the magnetic flux density of the permanent magnets 3a are superimposed on each other to thereby create a portion with a high magnetic flux density and a portion with a low magnetic flux density. In a case of the linear actuator A, the inner yoke 1, the outer yokes 4, and the coil 5 are fixed; therefore, the permanent magnets 3a and the reciprocator 3 fitted thereto are actuated. In addition, the piston 22 is actuated via the coupling member 33 fixed to the reciprocator 3.

By switching the direction of a current to the coil 5 in a predetermined cycle, the reciprocator 3, the permanent magnets 3a, and the piston 22 coupled to the reciprocator 3 via the coupling member 33 make reciprocating motion in a cycle determined based on the cycle of the current.

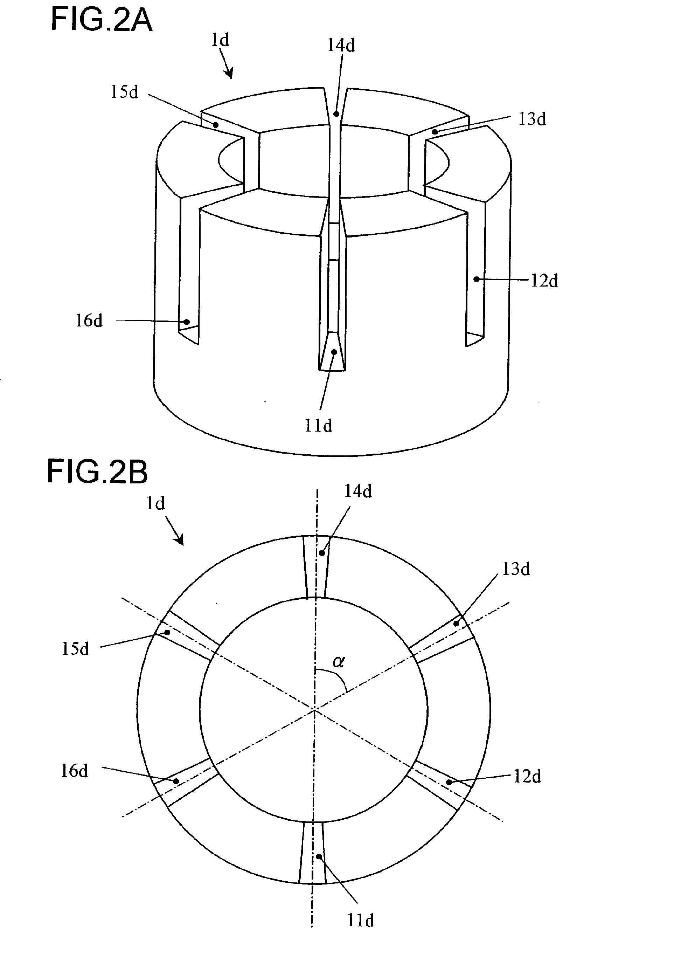

FIG. 2A is a top perspective view of one example of the inner yoke according to the invention. FIG. 2B is a plan view of the inner yoke shown in FIG. 2A.

The inner yoke 1d shown in FIG. 2A and FIG. 2B is basically cylindrically shaped, has, as discontinuous portions, notches extending along the axis thereof from one end surface toward the other end surface and provided along the circumference thereof at six sections at intervals (α=60°) of the same center angles (α). This inner yoke 1d is prepared by hardening a soft magnetic iron powder and resin material by sintering molding. As the soft magnetic iron powder, iron, iron with silicon, iron with nickel, iron with cobalt alloy, iron with aluminum, or the like can be used. As the resin material, epoxy resin, nylon resin, polyamide resin, polyester resin, or the like can be used.

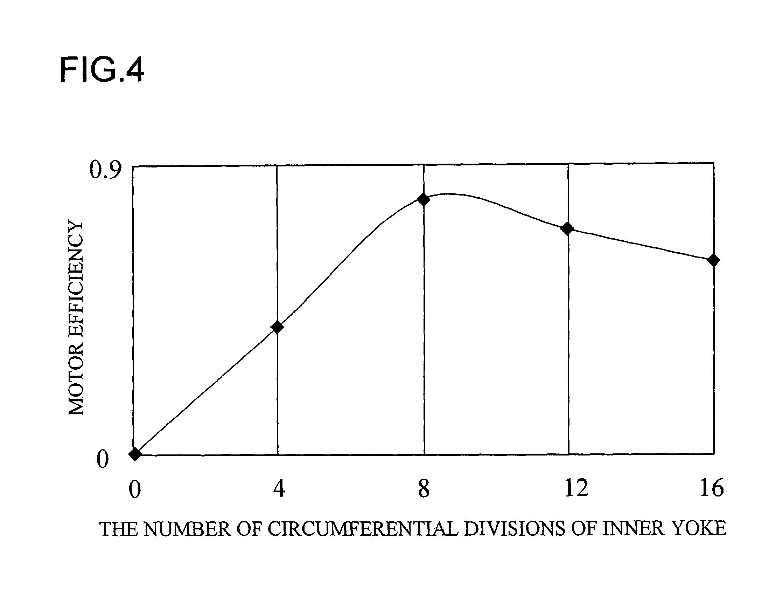

The inner yoke 1 d has the notches 11d to 16d on the upper side in the figure. The notches 11d to 16d are equal to one another in length and are formed longer than half the axial length of the inner yoke 1d. Providing the notches 11d to 16d makes it less likely to generate eddy current. This permits fabricating an inner yoke less susceptible to eddy current and having higher efficiency. This embodiment is exemplified by the notches provided circumferentially at the six sections at intervals of the same center angles, although not limited thereto. Thus, any of those capable of maintaining high efficiency can be widely used as the inner yoke (eight sections as shown in FIG. 4 according to an experiment).

In this embodiment, the notch is exemplified by, but not limited to, the one having a length longer than half the axial length of the inner yoke 1d, and thus any of those capable of maintaining a high efficiency as the inner yoke can be widely adopted. The other side thereof is so formed as to be linked circumferentially. Thus, compared to the one manufactured by first forming an inner yoke dividedly into a plurality of blocks spaced apart circumferentially at equal angular intervals and then coupling them together, notches can be provided upon sintering in a molding process, which makes manufacture easier and also provides a high accuracy.

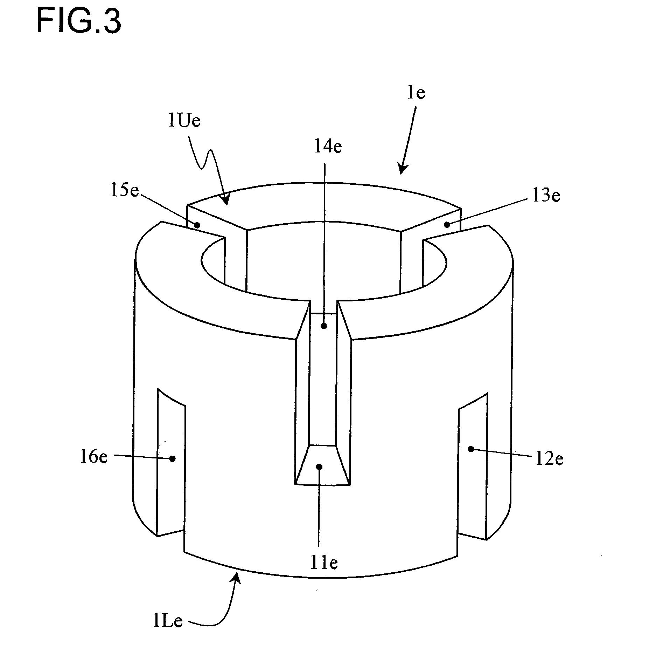

FIG. 3 is a top side perspective view of still another example of the inner yoke.

The inner yoke 1e shown in FIG. 3 has, as the notches as the adjacent discontinuous portions in the inner yoke 1d shown in FIG. 2A and FIG. 2B, notches provided on both end surfaces thereof alternately.

More specifically, in the inner yoke 1e of FIG. 3, the first notch 11e is provided in the upper end surface 1Ue in the figure, the second notch 12e and the sixth notch 16e adjacent to the first notch 11e are provided in the lower end surface 1Le in the figure. That is, the inner yoke 1e has the first notch 11e, the third notch 13e, and the fifth notch 15e provided in the upper end surface 1Ue and has the second notch 12e, the fourth notch 14e, and the sixth notch 16e provided in the lower end surface 1Le.

Consequently, although the inner yoke 1d has a portion with a closed circular cross section in the lower end portion in the figure thus having a possibility of eddy current to occur, the inner yoke 1e of this embodiment does not have a portion with a circular cross section; therefore, eddy current is less likely to occurs in this inner yoke 1e. Moreover, even with this formation, the notches can be provided upon sintering in the molding process, which makes manufacture easier and also provides a high accuracy.

FIG. 4 is a graph showing the relationship between the number of discontinuous portions formed in the inner yoke and the motor efficiency.

The horizontal axis of the graph shown in FIG. 4 denotes the number of discontinuous portions formed in the inner yoke, and the vertical axis denotes the motor efficiency. As viewed in the graph shown in FIG. 4, the motor efficiency increases with an increase in the number of discontinuous portions, reaches its peak around at the point where the number of discontinuous portions exceeds eight, and thereafter declines gradually. This indicates that the motor efficiency becomes highest when the number of discontinuous portions is eight.

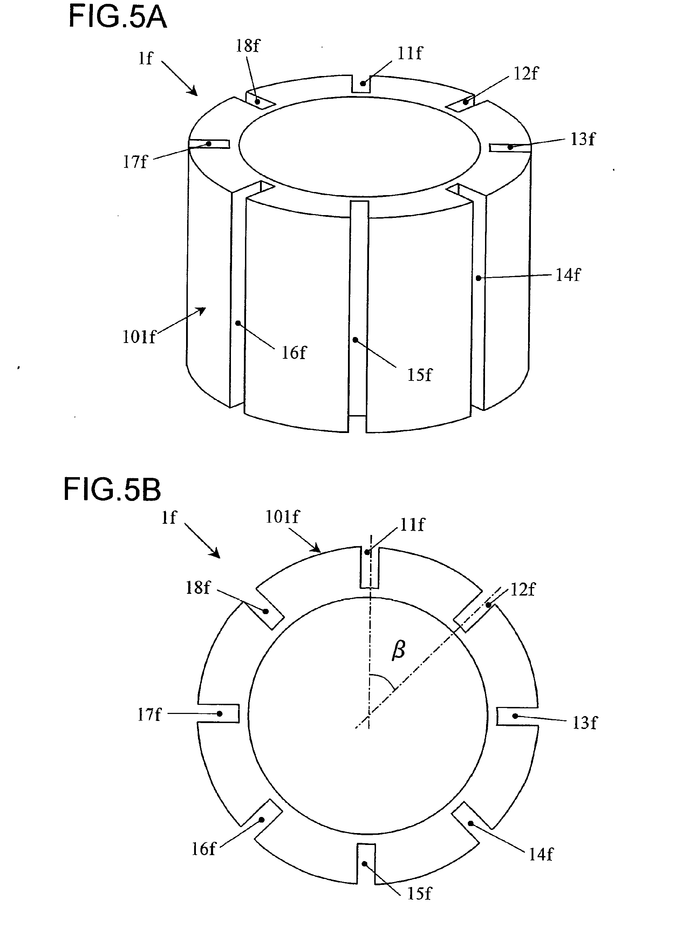

FIG. 5A is a perspective view of another example of the inner yoke according to the present invention. FIG. 5B is a plan view of the inner yoke shown in FIG. 5A. As shown in FIG. 5A and FIG. 5B, the inner yoke 1f may have groove portions 11f to 18f as discontinuous portions in an outer circumferential surface 101f that is cylindrically shaped. The depth of the groove portions 11f to 18f is preferably close to the thickness of the inner yoke 1c within the permitted range in terms of strength, and the eight groove portions 11f to 18f are provided at the same center angles (β=45 degrees). The groove portions 11f to 18f are formed over the full length of the cylinder in the axial direction thereof. This formation of the groove portions 11f to 18f suppresses the occurrence of eddy current.

The groove portions 11f to 18f formed in the inner yoke 1f are exemplified by those formed over the full length of the inner yoke 1f in the axial direction, although not limited thereto. Thus, any of those so shaped as to be effective in suppressing the occurrence of eddy current in the inner yoke, such as those extending from the plane surfaces on the both sides over a predetermined length, those not reaching the both end portions, and the like, can be widely adopted. Moreover, providing the discontinuous portions in the inner circumferential surface improves the effect in suppressing the eddy current.

Further, the groove portions 11f to 18f formed in the inner yoke 1f have a cross section that is rectangular shaped perpendicularly to the axis of the inner yoke 1f, although not limited thereto. Thus, any shape that is effective in suppressing the occurrence of eddy current in the inner yoke can be widely adopted.

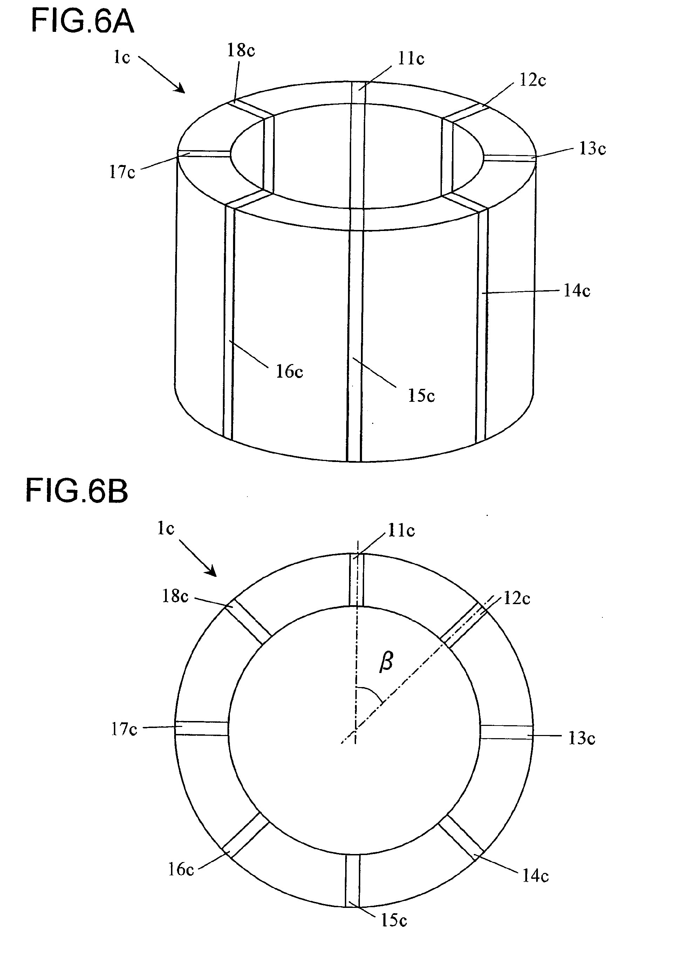

FIG. 6A is a perspective view of still another example of the inner yoke, and FIG. 6B is a plan view of the inner yoke shown in FIG. 6A.
The inner yoke 1c shown in FIG. 6A and FIG. 6B is divided into eight circumferentially at intervals of the same center angles. The divided portions 11c to 18c of the inner yoke 1c are prepared by sintering molding with the same composition ratio of iron powder to resin. Combining together the divided portions 11c to 18c prepared by sintering molding permits providing an inner yoke having even more uniform magnetic property without any substantial location-dependent variation in the property.

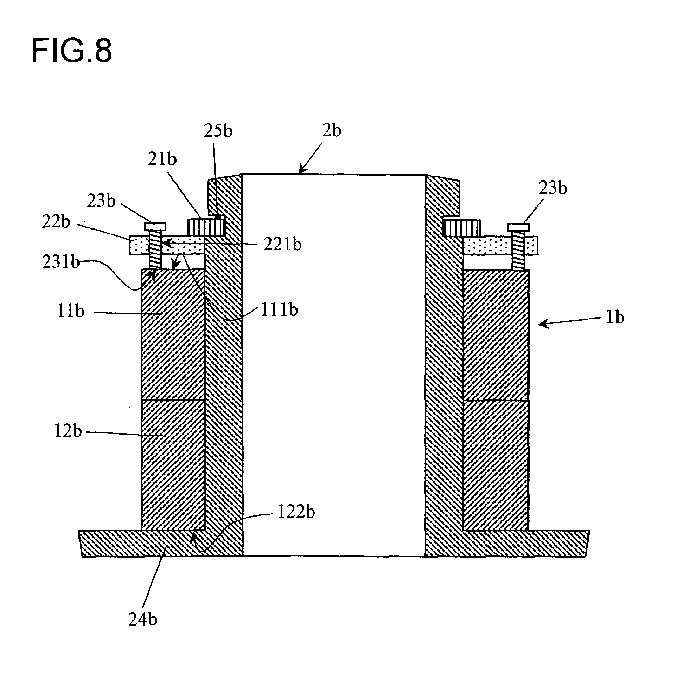

In this embodiment, based on the graph shown in FIG. 4, 8 is adopted as the number of divisions which provides the highest motor efficiency, although not limited thereto. Thus, any number of divisions may be widely adopted which permits the fabrication with uniform magnetic property. Moreover, the inner yoke may not be necessarily equally divided. By filling a nonconductor or a substance of high electric resistance between the divisions, eddy current loss can be highly prevented.

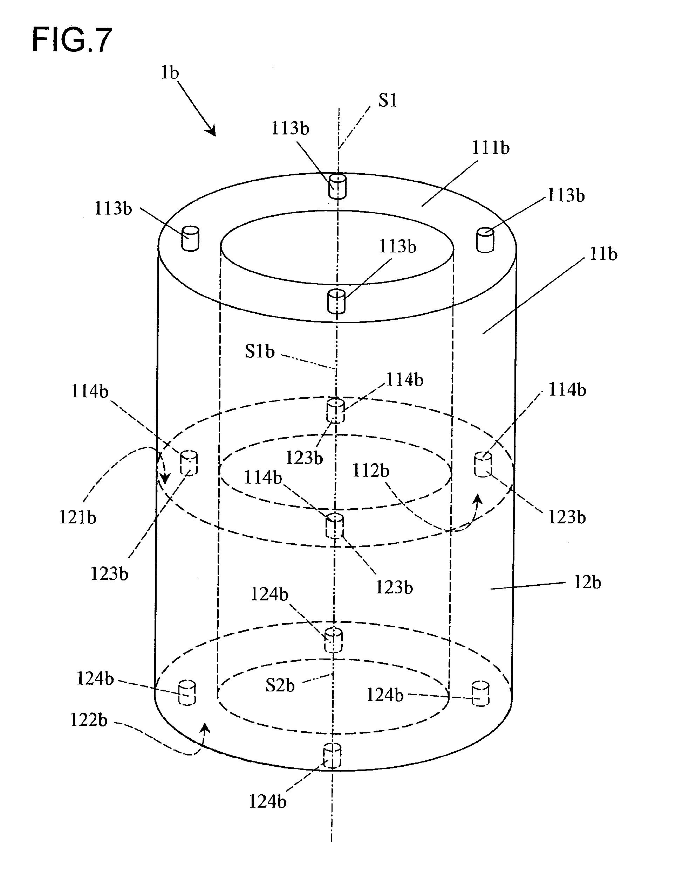

FIG. 7 is a perspective view showing still another example of the inner yoke according to the present invention.

The inner yoke 1b shown in FIG. 7 has a long stroke of reciprocal motion made by the linear actuator and an elongated axial length. The inner yoke 1b is fabricated by performing sintering molding on a soft magnetic iron powder and resin mixed together. In this case, the inner yoke 1b is large-sized, and thus the iron power and the resin may not be mixed together evenly, resulting in biased magnetic property depending on location. Thus, the inner yoke 1b is divided in the direction of an axis S1 into two: a first member 11b and a second member 12b, which are sinter-molded with the same composition ratio of the iron powder and the resin and then combined together. This results in almost no substantial property variation depending on the location of the inner yoke 1b, thus permitting fabricating an inner yoke with even more uniform magnetic property.

The first member 11b and the second member 12b respectively have engaging projections 113b and 123b provided on upper end surfaces 111b and 121b, and engaging depressions 114b and 124b provided on lower end surfaces 112b and 122b, as viewed in the figure. Inserting and engaging the engaging projections 123b of the second member 12b in the engaging depressions 114b of the first member 11b permits coupling them so that a central axis S1b of the first member 11b and a central axis S2b of the second member 12b agree with each other and also so that their circumferential positions agree with each other. That is, coupling together the first member 11b and the second member 12b permits providing the inner yoke 1b of a cylinder formed by combining together the first member 11b and the second member 12b in the axial length direction.

FIG. 8 is a side sectional view of the inner yoke shown in FIG. 7 fitted to a cylinder.

The inner yoke 1b is fixed to the cylinder 2b with a fixing ring 21b, a pressing ring 22b, and pressure screws 23b.

On the bottom of the cylinder 2b, a flange portion 24b is formed which makes surface contact with the lower end surface 122b of the second member 12b when the inner yoke 1b is inserted. In the cylinder 2b, a groove 25b is provided which is formed over the full circumference thereof at a portion slightly higher than the height of the upper end surface 111b of the first member 11b.

With the inner yoke 1b inserted in the cylinder 2b and then the lower end surface 122b of the second member 12b of the inner yoke 1b in contact with the flange portion 24b, the pressing ring 22b is so arranged as to cover the upper end surface 111b of the first member 11b of the inner yoke 1b. In the pressing ring 22b, female screw holes 221b are provided at intervals of the same center angles. Into the female screw holes 221b, the pressure screws 23b are screwed.

After arranging the pressing ring 22b, the fixing ring (for example, a C ring) 21b is fixed by being snapped into the groove 25b of the cylinder 2b. In this condition, the pressing ring 22b is fixed by the fixing ring 21b so as not to come off the cylinder 2b. When the pressure screw 23b is turned in this condition, the pressure screw 23b works in such a manner as to press the upper end surface 111b of the inner yoke 1b while lifting up the pressing ring 22b, upon which the pressing ring 22b lifts up while being supported on the upper end surface 111b of the inner yoke 1b by a tip 231b of the pressure screw 23b to thereby make contact with the fixing ring 21 b.

Further turning the pressure screw 23b causes the pressing ring 22b to lift up the fixing ring 21 b, which in turn causes the top surface of the fixing ring 21 b to press against the upper surface of the groove 25b, whereby the upper end surface 111 b of the inner yoke 1b is pressed via the pressure screw 23b screwed with the pressing ring 22b, which permits fixation of the inner yoke 1b. It is preferable that the pressing ring 22b be elastically deformed to some degrees and thus is formed of resin, although not limited thereto.

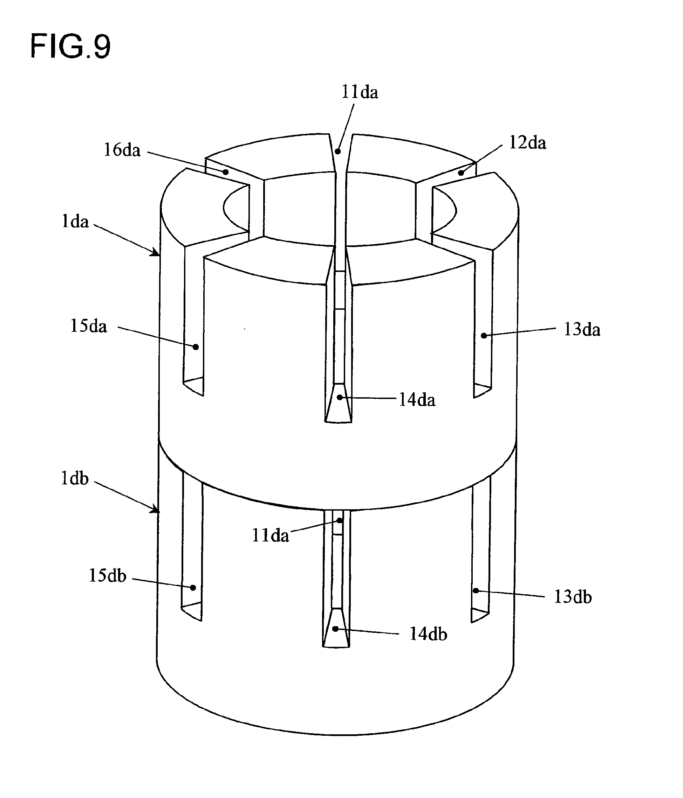

FIG. 9 is a perspective view of the inner yokes shown in FIG. 2A coupled together in the axial direction.

For example, to laminate the inner yoke 1d having notches as discontinuous portions in the axial direction and couple them together as shown in FIG. 9, notches 11da to 16da of a first member 1da and notches 11db to 16db of a second member 1db are respectively arranged axially in alignment with each other. The same applies to the inner yoke 1f having the grooves arranged on the outer circumferential surface as shown in FIG. 5 and to the inner yoke 1c divided in the circumferential direction.

In this embodiment, two inner yokes coupled together in the axial direction are exemplified, although not limited thereto. Thus, any number of inner yokes can be coupled together in accordance with a desired length. Moreover, shown in this embodiment are four engaging projection and four engaging depressions arranged on the circumference, although not limited thereto.

In this embodiment, the first member 11b and the second member 12b is exemplified by those coupled together by engaging the engaging depressions 114b of the lower end surface 112b of the first member 11b with the engaging projections 124b of the upper end surface 121 b of the second member 12b, although not limited thereto. Thus, any coupling methods, such as bonding with a bonding agent, welding, and the like can be widely adopted.

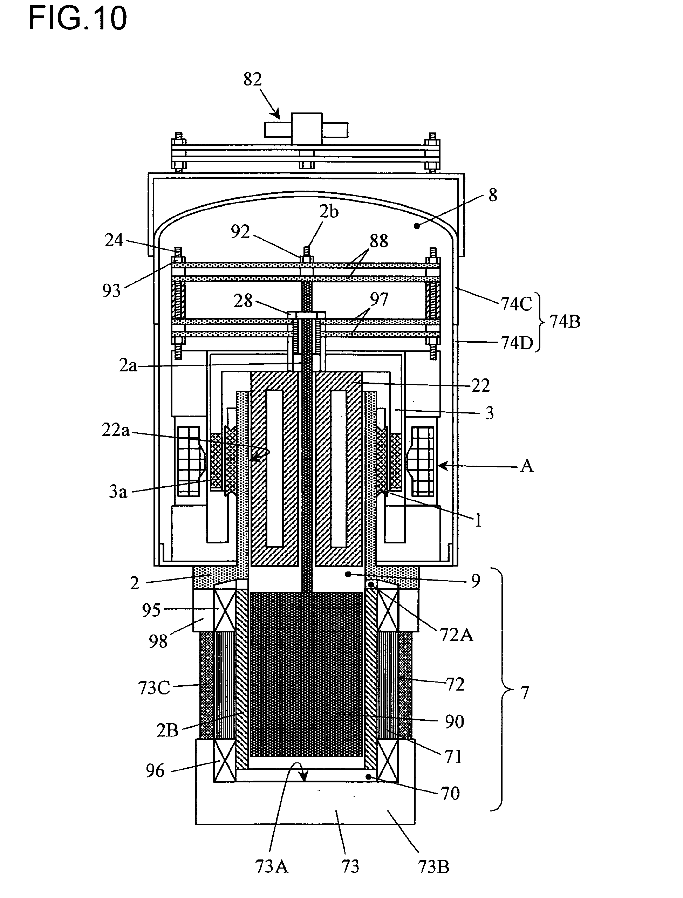

Next, as a second embodiment of the present invention, description will be given referring to a case where the linear actuator described in the aforementioned first embodiment is used in a Stirling engine. FIG. 10 is a sectional view showing one example of a device (hereinafter, referred to as a Stirling freezing machine) employing a Stirling engine as a freezing machine. This Stirling freezing machine cools down a cold head 73 by operating a Stirling cycle by components arranged inside a pressure-resistant case. These components will be described below. The pressure-resistant case is mainly formed of: a vessel 74B arranged on a back side space 8 side; and an outer cylinder 73C arranged on a workspace 7 side. The vessel 74B is further divided into two structures: a vessel main body 74D on the cold head 73 side; and a vessel cap 74C on the side (hereinafter, referred to as a vibration-proofing device 82 side in this document) opposite to the cold head 73 side.

In the pressure-resistant case, a cylinder 2 and a cylinder 2B are arranged which are coupled together including a communicating hole 72A. In the cylinders 2 and 2B, a piston 22 and a displacer 90 are inserted which are reciprocatable coaxially with the cylinders 2 and 2B. The linear actuator A for driving the piston 22 is provided outside the cylinder 2. The inside of the pressure-resistant case is mainly partitioned into two spaces, one of which corresponds to the back side space 8 mainly surrounded by the vessel 74B and the piston 22 and the other of which corresponds to the workspace 7 mainly surrounded by the piston 22, the outer cylinder 73C, and the cold head 73. The workspace 7 is further partitioned by the displacer 90 into two spaces: a compression space 9 located between the displacer 90 and the piston 22, and an expansion space 70 located between the displacer 90 and the cold head 73.

This compression space 9 and expansion space 70 communicate with each other via a communicating passage 72 formed between the cylinder 2B and the outer cylinder 73C. In the communicating passage 72, a high temperature side internal heat exchanger 95, a regenerator 71, and a low temperature side internal heat exchanger 96 are arranged in this order from the compression space 9 toward the expansion space 70. The cold head 73 is made of a highly heat conductive material, such as copper, aluminum, or the like, formed into the shape of a substantially bottomed cylinder, and is arranged so that a bottom portion 73A thereof faces the opening of the cylinder 2B while a cylinder portion 73B thereof faces the low temperature side internal heat exchanger 96. A warm head 98 is made of a highly heat conductive material, such as copper, aluminum, or the like, formed into the shape of a ring, and is arranged so that an inner circumference thereof faces the outer circumference of the high temperature side internal heat exchanger 95.

The piston 22 is a columnar structure, which is processed with a through-hole 22a that permits the insertion of a rod 2a through the central axis S thereof (see FIG. 1A), and which is further provided with a gas bearing, not shown, that provides bearing effect by discharging a refrigerant compressed by the compression space 9 to a gap between the outer circumferential surface of the piston 22 and the cylinder 2. The displacer 90 is a columnar structure which is provided with a gas bearing, not shown, that provides bearing effect by discharging a refrigerant compressed by the compression space 9 to a gap between the outer circumferential surface of the displacer 95 and the cylinder 2. Then, to the surface of this displacer 90 on the side where the piston 22 is arranged, the rod 2a is fitted which is inserted into the through-hole 22a of the piston 22. The end portion of the rod 2a on the side opposite to the displacer 90 side is processed into a screw portion 2b.

The linear actuator A is the one described in the first embodiment above, in which the coupling member 33 is integrated with the piston 22. To the end surface of the outer yoke 4 on the vibration-proofing device 82 side, a plurality of (for example, 4) fixed shafts 24 for fixing a piston support spring 97 and a displacer support spring 88 are vertically provided from this end surface toward the vibration-proofing device 82 side. The piston support spring 97 resiliently supports the piston 22, and is fixed by the fixed shaft 24 and is connected to a reciprocator 3 by a hollowed bolt 28. The displacer support spring 88 resiliently supports the piston 22, and is fixed to the fixed shaft 24 and connected to the rod.

At the end portion of the pressure-resistant case on the side opposite to the cold head 73 in the axial direction, the vibration-proofing device 82 is arranged for vibration control of the Stirling freezing machine. The vibration-proofing device 82 is formed of a mass body and a spring body whose natural vibration times is set to a frequency close to the vibrational frequency of the piston, and converts vibration energy to heat energy, thus permitting a reduction in vibrations of the entire Stirling freezing machine.

With the Stirling freezing machine structured as described above, a refrigerant is sealed in the pressure case thereof. As this refrigerant, hydrogen, helium, nitrogen, or the like is used and sealed in a high pressure of tens of atmospheres. Then, adding an alternating voltage to the linear actuator A causes reciprocation of the linear actuator A, followed by reciprocation of the piston 22. Subsequently, the displacer 90 reciprocates behind the motion of the piston 22 with a phase delay of approximately one fourths of a cycle, forming a Stirling cycle in the workspace 7. As a result, the high temperature side internal heat exchanger 95 is heated to a high temperature, and the low temperature side internal heat exchanger 96 is cooled down to a low temperature. Then the heat of the high temperature side internal heat exchanger 95 is transmitted to a warm head 98 to be discharged outside, while the heat from the outside is supplied to the low temperature side internal heat exchanger 96 via the cold head 73. That is, the cold head 73 is in a very low temperature state as viewed from the outside, and this low temperature can be utilized to cool down various subjects.

In such a Stirling freezing machine, the operation efficiency of the motor has great influence on the coefficient of performance (that is, COP). The use of the linear actuator described in the first embodiment permits providing a Stirling freezing machine with a favorable coefficient of performance.

In the embodiment described above, as a yoke molding method, sintering molding is adopted, although not limited thereto. Thus, the yoke may be fabricated by performing compression molding or the like on a soft magnetic iron powder.

Moreover, in the embodiment described above, as a yoke, an inner yoke is exemplified, although not limited thereto, and thus this is also adoptable to an outer yoke.

### Industrial Applicability

According to the present invention, a yoke that favorably prevents the occurrence of eddy current loss, an electromagnetic (linear) actuator capable of being driven at high efficiency, or a Stirling engine with favorable performance efficiency can be provided.

## Claims

1. A yoke which is formed by molding a soft magnetic iron powder and which is used for an electromagnetic actuator, wherein a discontinuous portion for preventing occurrence of eddy current loss is provided.

2. The yoke according to claim 1, wherein the discontinuous portion has one or a plurality of notches extended axially from one end surface toward another end surface thereof.

3. The yoke according to claim 2, wherein the discontinuous portion has one or a plurality of notches extended axially from said another end surface to said one end surface.

4. The yoke according to claim 1, wherein the discontinuous portion has one or a plurality of grooves extended axially on an outer side surface and (or) an inner side surface of the yoke.

5. The yoke according to claim 1, wherein the yoke is divided circumferentially into a plurality of blocks, the adjacent blocks are connected together with an insulating material sandwiched therebetween, and the connection portion where the insulating material is sandwiched serves as the discontinuous portion.

6. The yoke according to any of claims 1 to 5, wherein the yoke is divided axially into a plurality of divisions.

7. An electromagnetic actuator comprising: an outer yoke; an inner yoke that is formed by molding a soft magnetic iron powder and that is so arranged as to face an inside of the outer yoke; a coil portion that is provided at the outer yoke; a permanent magnet that reciprocates in accordance with a magnetic flux generated by the coil portion arranged between the outer yoke and the inner yoke; and a reciprocator that supports the permanent magnet,
wherein the yoke according to any one of claims 1 to 5 is adopted as the outer yoke and (or) the inner yoke.

8. An electromagnetic actuator comprising: an outer yoke; an inner yoke that is formed by molding a soft magnetic iron powder and that is so arranged as to face an inside of the outer yoke; a coil portion that is provided at the outer yoke; a permanent magnet that reciprocates in accordance with a magnetic flux generated by the coil portion arranged between the outer yoke and the inner yoke; and a reciprocator that supports the permanent magnet,
wherein the yoke according to claim 6 is adopted as the outer yoke and (or) the inner yoke.

9. A Stirling engine comprising: the electromagnetic linear actuator according to claim 7; a piston connected to the reciprocator; a cylinder that stores the piston, and a displacer that reciprocates with a phase difference from the piston.

10. A Stirling engine comprising: the electromagnetic linear actuator according to claim 8; a piston connected to the reciprocator; a cylinder that stores the piston, and a displacer that reciprocates with a phase difference from the piston.
